# EUROPEAN PATENT APPLICATION

(11) **EP 4 651 523 A1**
(43) Date of publication of application: **19.11.2025**
(21) Application number: 24741287.7
(22) Date of filing: 10.01.2024
(51) Int. Cl.: H04W 4/02

(54) **MESSAGE EXCHANGE METHOD FOR SIDELINK POSITIONING, TERMINAL AND NETWORK SIDE DEVICE**

(30) Priority: 11.01.2023 CN 202310042031
(71) Applicant: Vivo Mobile Communication Co., Ltd., Dongguan, Guangdong 523863 (CN)
(72) Inventor: ZHANG, Hongping, Dongguan, Guangdong 523863 (CN)
(74) Representative: Walaski, Jan Filip
(86) International application number: PCT/CN2024/071575
(87) International publication number: WO 2024/149290

(57) **Abstract**

The present application relates to the technical field of communications, and discloses a message exchange method for sidelink positioning, a terminal and a network side device. The message exchange method for sidelink positioning in embodiments of the present application comprises: a first terminal receives a first message sent by a network side device, the first message comprising a first container, the first container corresponding to a first sidelink positioning protocol (SLPP) message, and the first SLPP message being used for sidelink positioning; and the first terminal sends the first SLPP message or a second SLPP message to a second terminal on the basis of the first message, the second SLPP message comprising a second container, and the second container corresponding to the first SLPP message.

## Description

### CROSS-REFERENCE TO RELATED APPLICATIONS

This application claims priority to Chinese Patent Application No. 202310042031.2, filed in China on January 11, 2023, which is incorporated herein by reference in its entirety.

### TECHNICAL FIELD

This application pertains to the field of communication technologies, and specifically relates to a message exchange method for sidelink positioning, a terminal, and a network-side device.

### BACKGROUND

In addition to positioning based on a reference signal on a Uu interface (radio interface between user equipment (User Equipment, UE) and a base station), positioning based on a PC5 interface (radio interface between UEs) is also required in vehicle to everything (vehicle to everything, V2X) and other scenarios. For example, when a vehicle is not within coverage of a mobile network, sidelink (sidelink, SL) positioning may need to be performed.

In an SL positioning architecture based on a positioning server (such as a location management function (Location Management Function, LMF)), a positioning architecture based on the Uu interface is generally used, and the positioning server is responsible for controlling execution of SL positioning. A difference lies in that SL positioning involves at least two UEs (one target (target) UE and one or more anchor (anchor) UEs). UE measures an SL positioning reference signal (Positioning Reference Signal, PRS) sent by other UE, thereby implementing positioning. Therefore, in the SL positioning architecture based on the positioning server (such as the LMF), how the LMF specifically exchanges SL positioning related information with the target UE or the anchor UE over the PC5 interface is an urgent problem to be resolved.

### SUMMARY

Embodiments of this application provide a message exchange method for sidelink positioning, a terminal, and a network-side device, to resolve a problem of how an LMF specifically exchanges SL positioning related information with target UE or anchor UE over a PC5 interface.

According to a first aspect, a message exchange method for sidelink positioning is provided and includes:
receiving, by a first terminal, a first message sent by a network-side device, where the first message includes a first container, the first container corresponds to a first sidelink positioning protocol SLPP message, and the first SLPP message is used for sidelink positioning; and
sending, by the first terminal, the first SLPP message or a second SLPP message to a second terminal based on the first message, where the second SLPP message includes a second container, and the second container corresponds to the first SLPP message.

According to a second aspect, a message exchange method for sidelink positioning is provided and includes:
receiving, by a second terminal, a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the second SLPP message includes a second container, and the second container corresponds to the first SLPP message.

According to a third aspect, a message exchange method for sidelink positioning is provided and includes:
sending, by a network-side device, a first message to a first terminal, where the first message includes a first container, the first container corresponds to a first sidelink positioning protocol SLPP message, the first SLPP message is used for sidelink positioning, and the first SLPP message is a message sent by the network-side device to a second terminal.

According to a fourth aspect, a message exchange apparatus for sidelink positioning is provided and includes:
a receiving module, configured to receive a first message sent by a network-side device, where the first message includes a first container, the first container corresponds to a first sidelink positioning protocol SLPP message, and the first SLPP message is used for sidelink positioning; and
a sending module, configured to send the first SLPP message or a second SLPP message to a second terminal based on the first message, where the second SLPP message includes a second container, and the second container corresponds to the first SLPP message.

According to a fifth aspect, a message exchange apparatus for sidelink positioning is provided and includes:
a receiving module, configured to receive a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the second SLPP message includes a second container, and the second container corresponds to the first SLPP message.

According to a sixth aspect, a message exchange apparatus for sidelink positioning is provided and includes:
a sending module, configured to send a first message to a first terminal, where the first message includes a first container, the first container corresponds to a first sidelink positioning protocol SLPP message, the first SLPP message is used for sidelink positioning, and the first SLPP message is a message sent to a second terminal.

According to a seventh aspect, a first terminal is provided. The terminal includes a processor and a memory. The memory stores a program or instructions capable of running on the processor. When the program or instructions are executed by the processor, the steps of the method according to the first aspect are implemented.

According to an eighth aspect, a first terminal is provided and includes a processor and a communication interface. The communication interface is configured to: receive a first message sent by a network-side device, where the first message includes a first container, the first container corresponds to a first sidelink positioning protocol SLPP message, and the first SLPP message is used for sidelink positioning; and send the first SLPP message or a second SLPP message to a second terminal based on the first message, where the second SLPP message includes a second container, and the second container corresponds to the first SLPP message.

According to a ninth aspect, a second terminal is provided. The terminal includes a processor and a memory. The memory stores a program or instructions capable of running on the processor. When the program or instructions are executed by the processor, the steps of the method according to the second aspect are implemented.

According to a tenth aspect, a second terminal is provided and includes a processor and a communication interface. The communication interface is configured to receive a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the second SLPP message includes a second container, and the second container corresponds to the first SLPP message.

According to an eleventh aspect, a network-side device is provided. The network-side device includes a processor and a memory. The memory stores a program or instructions capable of running on the processor. When the program or instructions are executed by the processor, the steps of the method according to the third aspect are implemented.

According to a twelfth aspect, a network-side device is provided and includes a processor and a communication interface. The communication interface is configured to send a first message to a first terminal, where the first message includes a first container, the first container corresponds to a first sidelink positioning protocol SLPP message, the first SLPP message is used for sidelink positioning, and the first SLPP message is a message sent to a second terminal.

According to a thirteenth aspect, a communication system is provided and includes a first terminal, a second terminal, and a network-side device. The first terminal may be configured to perform the steps of the method according to the first aspect. The second terminal may be configured to perform the steps of the method according to the second aspect. The network-side device may be configured to perform the steps of the method according to the third aspect.

According to a fourteenth aspect, a readable storage medium is provided. The readable storage medium stores a program or instructions. When the program or instructions are executed by a processor, the steps of the method according to the first aspect are implemented, or the steps of the method according to the second aspect are implemented, or the steps of the method according to the third aspect are implemented.

According to a fifteenth aspect, a chip is provided. The chip includes a processor and a communication interface. The communication interface is coupled to the processor. The processor is configured to run a program or instructions to implement the method according to the first aspect, or implement the method according to the second aspect, or implement the method according to the third aspect.

According to a sixteenth aspect, a computer program or program product is provided. The computer program or program product is stored in a storage medium. The computer program or program product is executed by at least one processor to implement the steps of the method according to the first aspect, or implement the steps of the method according to the second aspect, or implement the steps of the method according to the third aspect.

In the embodiments of this application, the first terminal receives the first message sent by the network-side device, where the first message includes the first container, the first container corresponds to the first sidelink positioning protocol SLPP message, and the first SLPP message is used for sidelink positioning; and the first terminal sends the first SLPP message or the second SLPP message to the second terminal based on the first message, where the second SLPP message includes the second container, and the second container corresponds to the first SLPP message. Through the first terminal, an LMF exchanges SLPP messages with the second terminal, and the LMF exchanges SLPP messages with a plurality of terminals participating in sidelink positioning.

### BRIEF DESCRIPTION OF DRAWINGS

FIG. 1 is a schematic diagram of a wireless communication system to which an embodiment of this application can be applied;
FIG. 2 is a schematic diagram of a sidelink scenario according to an embodiment of this application;
FIG. 3 is a schematic diagram of a sidelink positioning architecture according to an embodiment of this application;
FIG. 4 is a first schematic flowchart of a message exchange method for sidelink positioning according to an embodiment of this application;
FIG. 5 is a first schematic interaction flowchart of a message exchange method for sidelink positioning according to an embodiment of this application;
FIG. 6 is a second schematic interaction flowchart of a message exchange method for sidelink positioning according to an embodiment of this application;
FIG. 7 is a second schematic flowchart of a message exchange method for sidelink positioning according to an embodiment of this application;
FIG. 8 is a third schematic flowchart of a message exchange method for sidelink positioning according to an embodiment of this application;
FIG. 9 is a first schematic diagram of a structure of a message exchange apparatus for sidelink positioning according to an embodiment of this application;
FIG. 10 is a second schematic diagram of a structure of a message exchange apparatus for sidelink positioning according to an embodiment of this application;
FIG. 11 is a third schematic diagram of a structure of a message exchange apparatus for sidelink positioning according to an embodiment of this application;
FIG. 12 is a schematic diagram of a structure of a communication device according to an embodiment of this application;
FIG. 13 is a schematic diagram of a structure of a terminal according to an embodiment of this application; and
FIG. 14 is a schematic diagram of a structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects. The term "indication" in the specification and claims of this application may be either an explicit indication or an implicit indication. The explicit indication may be understood as follows: A sender explicitly notifies a receiver, in a sent indication, of an operation to be performed or a result being requested. The implicit indication may be understood as follows: A receiver makes a decision based on an indication sent by a sender, and determines, based on a decision result, an operation to be performed or a result being requested.

It should be noted that technologies described in the embodiments of this application are not limited to a new radio (New Radio, NR) system or a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other communication systems than the NR system, for example, a 6th Generation (6th Generation, 6G) communication system.

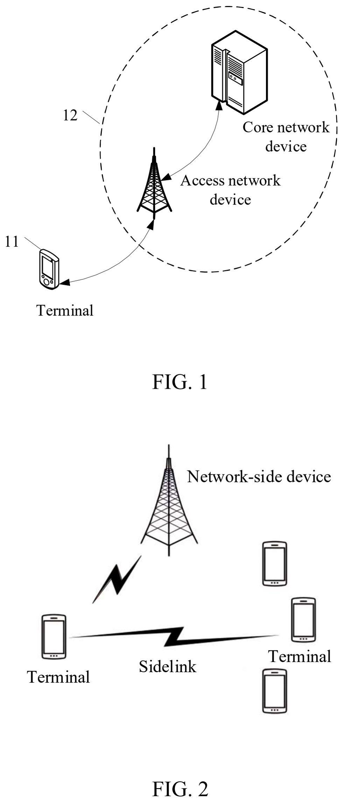

FIG. 1 is a schematic diagram of a wireless communication system to which an embodiment of this application can be applied. The wireless communication system shown in FIG. 1 includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. In addition to the foregoing terminal devices, the terminal 11 may be a chip in a terminal, such as a modem (Modem) chip or a system-on-chip (System on Chip, SoC). It should be noted that a specific type of the terminal 11 is not limited in the embodiments of this application.

The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), a location management function (Location Management Function, LMF), an enhanced serving mobile location center (Enhanced Serving Mobile Location Center, E-SMLC), a network data analytics function (Network Data Analytics Function, NWDAF), and the like. It should be noted that in the embodiments of this application, only a core network device in the NR system is used as an example for description, but a specific type of the core network device is not limited.

The following first describes related concepts and scenarios in the embodiments of this application.

A long term evolution (Long Term Evolution, LTE) system supports a sidelink (Sidelink, SL). The sidelink is used for direct data transmission between terminals without using a network device. The system architecture is shown in FIG. 2.

A design of an LTE SL is applicable to specific public safety affairs (for example, emergency communication on a fire site or a disaster site such as an earthquake), vehicle to everything (vehicle to everything, V2X) communication, or the like. Vehicle to everything communication includes various services, such as basic security communication, advanced (autonomous) driving, platooning, and sensor expansion. Because the LTE SL supports only broadcast communication, the LTE SL is mainly used for basic security communication. Other advanced V2X services with strict quality of service (Quality of Service, QoS) requirements in terms of latency and reliability will be supported by a new radio (New Radio, NR) SL.

A 5G NR system can also support an SL interface for direct communication between terminals, and support three transmission modes: broadcast (broadcast), groupcast (groupcast), and unicast (unicast).

Currently, in addition to positioning based on a reference signal on a Uu interface (a radio interface between UE and a base station), positioning based on a PC5 interface (a radio interface between UEs) is required in a scenario such as V2X. For example, when a vehicle is not within coverage of a mobile network, SL positioning may need to be performed.

In an SL positioning architecture based on a positioning server (such as a location management function (Location Management Function, LMF)), a positioning architecture based on the Uu interface is generally used, and the positioning server is responsible for controlling execution of SL positioning. A difference lies in that SL positioning involves at least two UEs (one target (target) UE and one or more anchor (anchor) UEs). UE measures an SL positioning reference signal (Positioning Reference Signal, PRS) sent by other UE, thereby implementing positioning.

Target UE (target UE, which may also be referred to as a target terminal): target UE to be positioned, for which an absolute location, a relative position, or a location range of the UE needs to be obtained.

Anchor UE (anchor UE, which may also be referred to as an anchor terminal): UE that supports positioning of the target UE, for example, provides positioning-related information by sending and/or receiving an SL PRS.

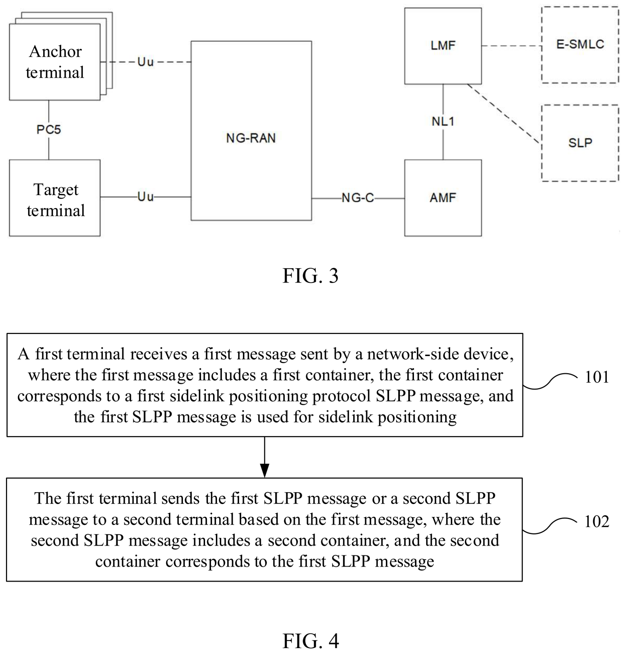

FIG. 3 shows an SL positioning architecture that is based on an LMF. An NG-RAN is an access network device, and the LMF interacts with an AMF, an evolved serving mobile location center (Evolved Serving Mobile Location Center, E-SMLC), a service location protocol (Service Location Protocol, SLP) server, and the like. This architecture is applicable to a positioning scenario in which target UE and/or anchor UE is within network coverage.

For SL positioning, a new protocol layer is defined: a sidelink positioning protocol (Sidelink Positioning Protocol, SLPP) layer, which is a protocol layer used for SL positioning. For example, the SLPP layer is located above a packet data convergence protocol (Packet Data Convergence Protocol, PDCP) layer, or located above a PC5 radio resource control (Radio Resource Control, RRC) or PC5-S layer. SLPP can be used to exchange positioning messages between target UE and anchor UE.

The long term evolution positioning protocol (Long term evolution Positioning Protocol, LPP) protocol can also be reused between a positioning server and a terminal during positioning based on the Uu interface.

A message exchange method for sidelink positioning according to the embodiments of this application is hereinafter described in detail by using some embodiments and application scenarios thereof with reference to the accompanying drawings.

FIG. 4 is a first schematic flowchart of a message exchange method for sidelink positioning according to an embodiment of this application. As shown in FIG. 4, the method includes steps 101 and 102.

Step 101: A first terminal receives a first message sent by a network-side device, where the first message includes a first container, the first container corresponds to a first sidelink positioning protocol SLPP message, and the first SLPP message is used for sidelink positioning.

Specifically, in a process of performing sidelink positioning, for example, when the network-side device (such as a location management function LMF) determines to use sidelink positioning, the network-side device needs to send the first SLPP message to a second terminal, where the first SLPP message is used for sidelink positioning. In some scenarios, for example, the second terminal is beyond network coverage, or the network-side device has not established a direct communication connection to the second terminal. Therefore, the first SLPP message and related information may be sent to the first terminal. Because the first terminal is within the network coverage and can communicate with the second terminal through a sidelink, the first SLPP message can be sent to the second terminal through the first terminal.

Alternatively, the second terminal may be a terminal within the network coverage. This is not limited in this embodiment of this application.

Optionally, the first terminal is a target terminal and the second terminal is an anchor terminal; or the first terminal is an anchor terminal and the second terminal is a target terminal.

The first message is used to deliver, to the first terminal, an SLPP message sent by the network-side device to the second terminal.

Specifically, the first SLPP message may be delivered by using the first message, the first message includes the first container, and the first container corresponds to the first SLPP message.

Step 102: The first terminal sends the first SLPP message or a second SLPP message to the second terminal based on the first message, where the second SLPP message includes a second container, and the second container corresponds to the first SLPP message.

Specifically, the first terminal sends an SLPP message based on the first message, for example, obtains the corresponding first SLPP message based on the first message, generates the second SLPP message based on the first SLPP message, and sends the second SLPP message, or the first terminal may directly send the first SLPP message without generating the second SLPP message. The second SLPP message may include the second container corresponding to the first SLPP message, so that the second terminal obtains the first SLPP message. For example, the first terminal may communicate with the second terminal through the SLPP protocol.

For example, the first terminal sends the first SLPP message or the second SLPP message to the second terminal through a PC5 interface.

If the second terminal receives the second SLPP message, the second terminal parses the second container to obtain the first SLPP message.

In the message exchange method for sidelink positioning according to this embodiment of this application, the first terminal receives the first message sent by the network-side device, where the first message includes the first container, the first container corresponds to the first sidelink positioning protocol SLPP message, and the first SLPP message is used for sidelink positioning; and the first terminal sends the first SLPP message or the second SLPP message to the second terminal based on the first message, where the second SLPP message includes the second container, and the second container corresponds to the first SLPP message. Through the first terminal, the LMF exchanges SLPP messages with the second terminal, and the LMF exchanges SLPP messages with a plurality of terminals participating in sidelink positioning.

Optionally, the first message is a non-access stratum (Non-Access Stratum, NAS) message, a long term evolution LTE positioning protocol (LTE Positioning Protocol, LPP) message, or a sidelink positioning protocol SLPP message.

Optionally, if no sidelink unicast connection is established between the first terminal and the second terminal, the first terminal first establishes a sidelink unicast connection to the second terminal, and then sends the first SLPP message or the second SLPP message to the second terminal.

Optionally, the first message further includes a terminal identifier or a terminal index of the second terminal.

Optionally, the first message includes a first SLPP message sent to one or more second terminals, or the first message includes one or more first SLPP messages sent to the second terminal.

Specifically, the first message may include an SLPP message sent to one or more second terminals, and each second terminal corresponds to one terminal identifier or one terminal index of the second terminal. Optionally, for each second terminal, the first message may include one or more SLPP messages sent to the second terminal, to reduce a positioning delay and signaling overheads.

Optionally, the LMF and the first terminal maintain the terminal identifier and/or the terminal index of the second terminal. For example, before step 101, in a process in which the LMF determines a terminal participating in the sidelink positioning, the terminal identifier or the terminal index of the second terminal may be obtained and/or determined by the first terminal and the LMF. Details are not described herein.

Optionally, step 102 may be specifically implemented in the following manner:

The first terminal determines, based on the terminal identifier or the terminal index of the second terminal, to send the first SLPP message or the second SLPP message to the second terminal; and
the first terminal sends the first SLPP message or the second SLPP message to the second terminal.

Specifically, if the first terminal determines, based on the terminal identifier or the terminal index of the second terminal in the first message, that the first SLPP message needs to be sent to the second terminal, the first terminal sends the first SLPP message or the second SLPP message to the second terminal.

Optionally, in a case that the first message does not include a terminal identifier or a terminal index of the second terminal, the first terminal processes the first SLPP message.

Specifically, if an information element for the terminal identifier or the terminal index of the second terminal in the first message is absent, the first terminal determines that the first SLPP message is sent by the LMF to the first terminal (in a case that the LMF sends the SLPP message to the first terminal), and then the first terminal processes the first SLPP message, and the process ends.

Optionally, the first SLPP message or the second SLPP message is used to indicate that the first SLPP message is a message from the network-side device; or the first SLPP message or the second SLPP message carries first indication information, where the first indication information is used to indicate that the first SLPP message is a message from the network-side device.

Specifically, the first SLPP message itself (for example, a message type or message name) may carry the first indication information used to indicate that the first SLPP message is from the LMF.

The second SLPP message itself (such as a message type and a message name) may carry the first indication information used to indicate that the first SLPP message is from the LMF, so that the second terminal can know that the second terminal is interacting with the LMF instead of interacting with another terminal (such as positioning server UE (positioning server UE)), so that different processing can be performed, and that implementation complexity of the terminal is low.

Optionally, the second terminal does not need to distinguish whether the first SLPP message or the second SLPP message comes from the LMF, the positioning server UE, or another terminal. The second terminal only needs to process the first SLPP message or the second SLPP message, thereby reducing implementation complexity of the terminal.

Optionally, the first SLPP message or the second SLPP message is directly carried over PC5-S or PDCP ("directly" herein means that the second SLPP message is directly delivered from an SLPP layer to a layer below the SLPP layer on the PC5 interface of the first terminal, such as a PC5-S protocol layer or a PDCP protocol layer, and transmitted to the second terminal).

Optionally, the method further includes:
the first terminal receives a third SLPP message sent by the second terminal, where the third SLPP message includes a third container, the third container corresponds to a fourth SLPP message, the fourth SLPP message is used for sidelink positioning, and the fourth SLPP message is a message sent by the second terminal to the network-side device; and
the first terminal sends a second message to the network-side device based on the third SLPP message, where the second message includes a fourth container, and the fourth container corresponds to the fourth SLPP message.

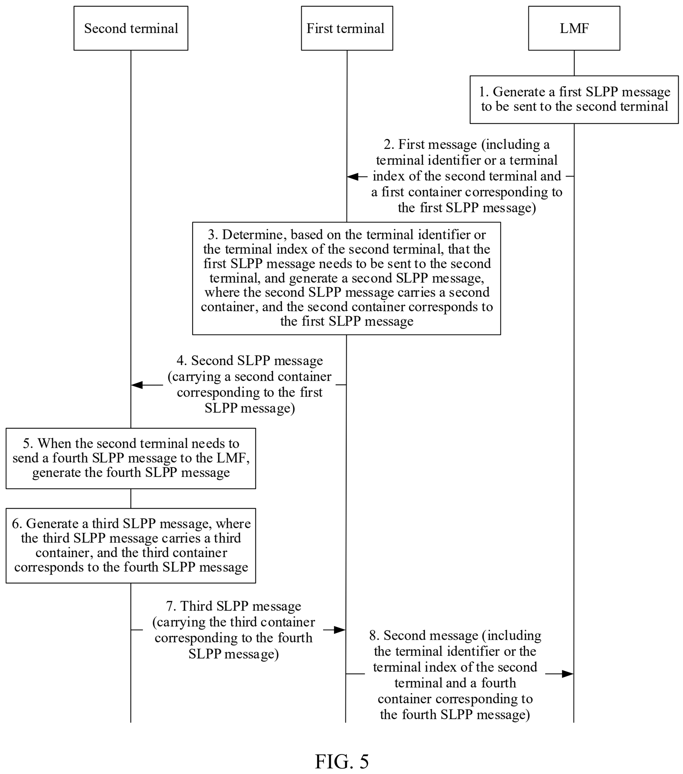

Specifically, as shown in FIG. 5, when the second terminal needs to send an SLPP message to the LMF, the second terminal generates a fourth SLPP message. Further, the second terminal generates a third SLPP message, where the third SLPP message carries a third container, and the third container corresponds to the fourth SLPP message, for example, the third container includes content of the fourth SLPP message.

The second terminal sends the third SLPP message to the first terminal. The first terminal receives the third SLPP message and then parses the third SLPP message to obtain the fourth SLPP message.

The first terminal sends a second message to the LMF, where the second message is used to deliver the fourth SLPP message sent by the first terminal to the LMF.

Optionally, the third SLPP message itself (such as a message type or a message name) or the third SLPP message carries second indication information used to indicate that the fourth SLPP message is sent to the LMF. Based on this, the first terminal knows that the third SLPP message needs to be sent to the LMF.

For example, as shown in FIG. 5, the method includes the following steps.

Step 1: The LMF generates a first SLPP message to be sent to the second terminal.

Step 2: The LMF sends a first message to the first terminal. For example, the first message includes a terminal identifier or a terminal index of the second terminal and a first container corresponding to the first SLPP message.

Step 3: The first terminal determines, based on the terminal identifier or the terminal index of the second terminal, that the first SLPP message needs to be sent to the second terminal, and generates a second SLPP message, where the second SLPP message carries a second container, and the second container corresponds to the first SLPP message.

Step 4: The first terminal sends the second SLPP message to the second terminal, where the second SLPP message carries a second container corresponding to the first SLPP message.

Step 5: When the second terminal needs to send a fourth SLPP message to the LMF, the second terminal generates the fourth SLPP message.

Step 6: The second terminal generates a third SLPP message, where the third SLPP message carries a third container, and the third container corresponds to the fourth SLPP message.

Step 7: The second terminal sends the third SLPP message to the first terminal, where the third SLPP message carries the third container corresponding to the fourth SLPP message.

Step 8: The first terminal sends a second message to the LMF, where the second message includes the terminal identifier or the terminal index of the second terminal and a fourth container corresponding to the fourth SLPP message.

Optionally, the method further includes:
the first terminal receives a fourth SLPP message sent by the second terminal, where the fourth SLPP message is used for sidelink positioning, and the fourth SLPP message is a message sent by the second terminal to the network-side device; and
the first terminal sends a second message to the network-side device based on the fourth SLPP message, where the second message includes a fourth container, and the fourth container corresponds to the fourth SLPP message.

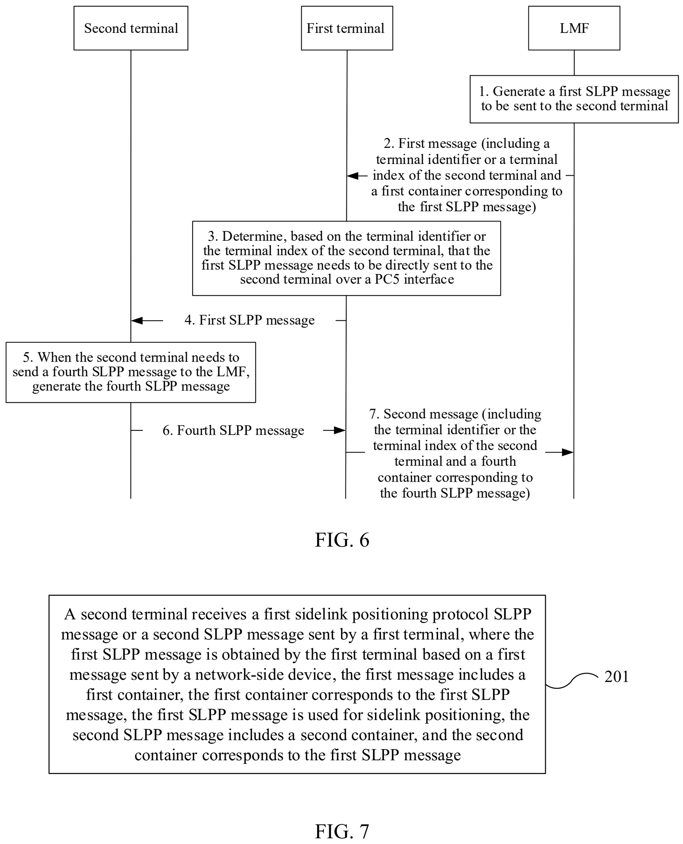

Specifically, as shown in FIG. 6, when the second terminal needs to send an SLPP message to the LMF, the second terminal generates a fourth SLPP message. The second terminal directly sends the fourth SLPP message to the first terminal, and the first terminal receives the fourth SLPP message.

The first terminal sends a second message to the LMF, where the second message is used to deliver the fourth SLPP message sent by the first terminal to the LMF.

Optionally, the second message includes a terminal identifier or a terminal index of the second terminal, and the LMF knows, based on the terminal identifier or the terminal index, which second terminal has sent the SLPP message.

Optionally, the second message is a NAS message, an LPP message, or an SLPP message.

In the foregoing implementation, the LMF may exchange an SLPP messages with another second terminal through the first terminal, to implement sidelink positioning and obtain a location of a target terminal (such as the first terminal or the second terminal).

For example, as shown in FIG. 6, the method includes the following steps.

Step 1: The LMF generates a first SLPP message to be sent to the second terminal.

Step 2: The LMF sends a first message to the first terminal. For example, the first message includes a terminal identifier or a terminal index of the second terminal and a first container corresponding to the first SLPP message.

Step 3: The first terminal determines, based on the terminal identifier or the terminal index of the second terminal, that the first SLPP message needs to be directly sent to the second terminal over a PC5 interface.

Step 4: The first terminal sends the first SLPP message to the second terminal.

Step 5: When the second terminal needs to send a fourth SLPP message to the LMF, the second terminal generates the fourth SLPP message.

Step 6: The second terminal sends the fourth SLPP message to the first terminal.

Step 7: The first terminal sends a second message to the LMF, where the second message includes the terminal identifier or the terminal index of the second terminal and a fourth container corresponding to the fourth SLPP message.

It should be noted that when the LMF needs to interact with a third terminal, a fourth terminal, or the like, the LMF may also interact with the third terminal, the fourth terminal, or the like through the first terminal based on the foregoing method. It should be noted that the LMF interacts with the second terminal, the third terminal, the fourth terminal, or the like through the first terminal, not based on a terminal relay (UE Relay) technology, but by controlling forwarding of signaling, which reduces implementation complexity.

FIG. 7 is a second schematic flowchart of a message exchange method for sidelink positioning according to an embodiment of this application. As shown in FIG. 7, the method includes the following step.

Step 201: A second terminal receives a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the first SLPP message is a message sent by the network-side device to the second terminal, the second SLPP message includes a second container, and the second container corresponds to the first SLPP message.

Optionally, the first message further includes a terminal identifier or a terminal index of the second terminal.

Optionally, the first message is used to deliver, to the first terminal, an SLPP message sent by the network-side device to the second terminal.

Optionally, the method further includes:
the second terminal sends a third SLPP message to the first terminal, where the third SLPP message includes a third container, the third container corresponds to a fourth SLPP message, the fourth SLPP message is used for sidelink positioning, and the fourth SLPP message is a message sent by the second terminal to the network-side device.

Optionally, the method further includes:
the second terminal sends a fourth SLPP message to the first terminal, where the fourth SLPP message is used for sidelink positioning, and the fourth SLPP message is a message sent by the second terminal to the network-side device.

Optionally, the first SLPP message or the second SLPP message is used to indicate that the first SLPP message is a message from the network-side device; or the first SLPP message or the second SLPP message carries first indication information, where the first indication information is used to indicate that the first SLPP message is a message from the network-side device.

Optionally, the third SLPP message is used to indicate that the fourth SLPP message is a message sent to the network-side device, or the third SLPP message carries second indication information, where the second indication information is used to indicate that the fourth SLPP message is a message sent to the network-side device.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the first message includes a first SLPP message sent to one or more second terminals, or the first message includes one or more first SLPP messages sent to the second terminal.

A specific implementation process and technical effect of the method in this embodiment are the same as those of the method embodiment on the first terminal side. For details, refer to the detailed descriptions in the method embodiment on the first terminal side. Details are not described herein again.

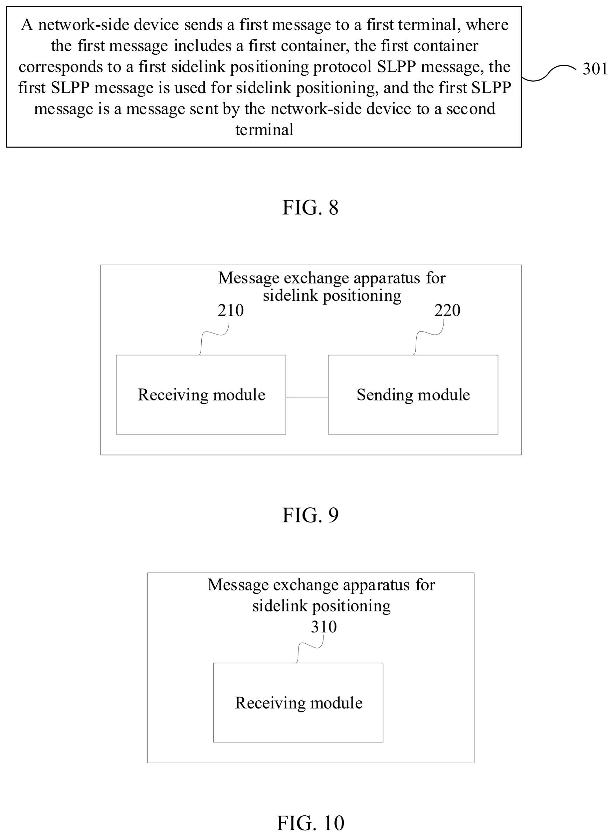

FIG. 8 is a third schematic flowchart of a message exchange method for sidelink positioning according to an embodiment of this application. As shown in FIG. 8, the method includes the following step.

Step 301: A network-side device sends a first message to a first terminal, where the first message includes a first container, the first container corresponds to a first sidelink positioning protocol SLPP message, the first SLPP message is used for sidelink positioning, and the first SLPP message is a message sent by the network-side device to a second terminal.

Optionally, the first message further includes a terminal identifier or a terminal index of the second terminal.

Optionally, the first message is used to deliver, to the first terminal, an SLPP message sent by the network-side device to the second terminal.

Optionally, the method further includes:
the network-side device receives a second message sent by the first terminal, where the second message includes a fourth container, the fourth container corresponds to a fourth SLPP message, the fourth SLPP message is used for sidelink positioning, and the fourth SLPP message is a message sent by the second terminal to the network-side device.

Optionally, the second message further includes a terminal identifier or a terminal index of the second terminal.

Optionally, the first SLPP message is used to indicate that the first SLPP message is a message from the network-side device, or the first SLPP message carries first indication information, where the first indication information is used to indicate that the first SLPP message is a message from the network-side device.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the second message is a NAS message, an LPP message, or an SLPP message.

Optionally, the first message includes a first SLPP message sent to one or more second terminals, or the first message includes one or more first SLPP messages sent to the second terminal.

A specific implementation process and technical effect of the method in this embodiment are the same as those of the method embodiment on the first terminal side. For details, refer to the detailed descriptions in the method embodiment on the first terminal side. Details are not described herein again.

The message exchange method for sidelink positioning according to the embodiments of this application may be performed by a message exchange apparatus for sidelink positioning. A message exchange apparatus for sidelink positioning according to the embodiments of this application is described by assuming that the message exchange apparatus for sidelink positioning performs the message exchange method for sidelink positioning in the embodiments of this application.

FIG. 9 is a first schematic diagram of a structure of a message exchange apparatus for sidelink positioning according to an embodiment of this application. As shown in FIG. 9, the message exchange apparatus for sidelink positioning is applied to a first terminal and includes:
a receiving module 210, configured to receive a first message sent by a network-side device, where the first message includes a first container, the first container corresponds to a first sidelink positioning protocol SLPP message, and the first SLPP message is used for sidelink positioning; and
a sending module 220, configured to send the first SLPP message or a second SLPP message to a second terminal based on the first message, where the second SLPP message includes a second container, and the second container corresponds to the first SLPP message.

Optionally, the first message further includes a terminal identifier or a terminal index of the second terminal.

Optionally, the apparatus further includes:
a processing module, configured to determine, based on the terminal identifier or the terminal index of the second terminal, to send the first SLPP message or the second SLPP message to the second terminal; and
the sending module 220 is specifically configured to send the first SLPP message or the second SLPP message to the second terminal after the processing module determines to send the first SLPP message or the second SLPP message to the second terminal.

Optionally, the first message is used to deliver, to the first terminal, an SLPP message sent by the network-side device to the second terminal.

Optionally, the receiving module 210 is further configured to:
receive a third SLPP message sent by the second terminal, where the third SLPP message includes a third container, the third container corresponds to a fourth SLPP message, the fourth SLPP message is used for sidelink positioning, and the fourth SLPP message is a message sent by the second terminal to the network-side device; and
optionally, the sending module 220 is further configured to:
   send a second message to the network-side device based on the third SLPP message, where the second message includes a fourth container, and the fourth container corresponds to the fourth SLPP message.

Optionally, the receiving module 210 is further configured to:
receive a fourth SLPP message sent by the second terminal, where the fourth SLPP message is used for sidelink positioning, and the fourth SLPP message is a message sent by the second terminal to the network-side device; and
optionally, the sending module 220 is further configured to:
   send a second message to the network-side device based on the fourth SLPP message, where the second message includes a fourth container, and the fourth container corresponds to the fourth SLPP message.

Optionally, the second message further includes a terminal identifier or a terminal index of the second terminal.

Optionally, the first SLPP message or the second SLPP message is used to indicate that the first SLPP message is a message from the network-side device; or the first SLPP message or the second SLPP message carries first indication information, where the first indication information is used to indicate that the first SLPP message is a message from the network-side device.

Optionally, the third SLPP message is used to indicate that the fourth SLPP message is a message sent to the network-side device, or the third SLPP message carries second indication information, where the second indication information is used to indicate that the fourth SLPP message is a message sent to the network-side device.

Optionally, the processing module is further configured to establish a sidelink unicast connection to the second terminal.

Optionally, the processing module is further configured to process, by the first terminal, the first SLPP message in a case that the first message does not include a terminal identifier or a terminal index of the second terminal.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the second message is a NAS message, an LPP message, or an SLPP message.

Optionally, the first message includes a first SLPP message sent to one or more second terminals, or the first message includes one or more first SLPP messages sent to the second terminal.

The apparatus in this embodiment may be configured to perform the method in any one of the foregoing method embodiments on the first terminal side. A specific implementation process and technical effect thereof are the same as those of the method embodiment on the first terminal side. For details, refer to the detailed descriptions in the method embodiment on the first terminal side. Details are not described herein again.

FIG. 10 is a second schematic diagram of a structure of a message exchange apparatus for sidelink positioning according to an embodiment of this application. As shown in FIG. 10, the message exchange apparatus for sidelink positioning is applied to a second terminal and includes:
a receiving module 310, configured to receive a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the second SLPP message includes a second container, and the second container corresponds to the first SLPP message.

Optionally, the first message further includes a terminal identifier or a terminal index of the second terminal.

Optionally, the first message is used to deliver, to the first terminal, an SLPP message sent by the network-side device to the second terminal.

Optionally, the apparatus further includes:
a sending module, configured to send a third SLPP message to the first terminal, where the third SLPP message includes a third container, the third container corresponds to a fourth SLPP message, the fourth SLPP message is used for sidelink positioning, and the fourth SLPP message is a message sent by the second terminal to the network-side device; or
optionally, a sending module, configured to send a fourth SLPP message to the first terminal, where the fourth SLPP message is used for sidelink positioning, and the fourth SLPP message is a message sent by the second terminal to the network-side device.

Optionally, the first SLPP message or the second SLPP message is used to indicate that the first SLPP message is a message from the network-side device; or the first SLPP message or the second SLPP message carries first indication information, where the first indication information is used to indicate that the first SLPP message is a message from the network-side device.

Optionally, the third SLPP message is used to indicate that the fourth SLPP message is a message sent to the network-side device, or the third SLPP message carries second indication information, where the second indication information is used to indicate that the fourth SLPP message is a message sent to the network-side device.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the first message includes a first SLPP message sent to one or more second terminals, or the first message includes one or more first SLPP messages sent to the second terminal.

The apparatus in this embodiment may be configured to perform the method in any one of the foregoing method embodiments on the second terminal side. A specific implementation process and technical effect thereof are the same as those of the method embodiment on the second terminal side. For details, refer to the detailed descriptions in the method embodiment on the second terminal side. Details are not described herein again.

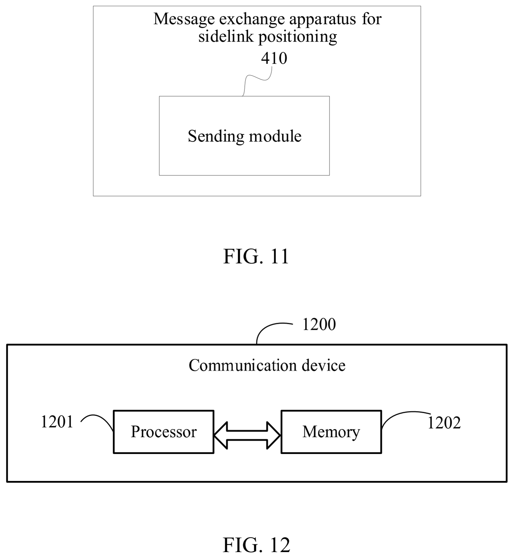

FIG. 11 is a third schematic diagram of a structure of a message exchange apparatus for sidelink positioning according to an embodiment of this application. As shown in FIG. 11, the message exchange apparatus for sidelink positioning is applied to a network-side device and includes:
a sending module 410, configured to send a first message to a first terminal, where the first message includes a first container, the first container corresponds to a first sidelink positioning protocol SLPP message, the first SLPP message is used for sidelink positioning, and the first SLPP message is a message sent by the network-side device to a second terminal.

Optionally, the first message further includes a terminal identifier or a terminal index of the second terminal.

Optionally, the first message is used to deliver, to the first terminal, an SLPP message sent by the network-side device to the second terminal.

Optionally, the apparatus further includes:
a receiving module, configured to receive a second message sent by the first terminal, where the second message includes a fourth container, the fourth container corresponds to a fourth SLPP message, the fourth SLPP message is used for sidelink positioning, and the fourth SLPP message is a message sent by the second terminal to the network-side device.

Optionally, the second message further includes a terminal identifier or a terminal index of the second terminal.

Optionally, the first SLPP message is used to indicate that the first SLPP message is a message from the network-side device, or the first SLPP message carries first indication information, where the first indication information is used to indicate that the first SLPP message is a message from the network-side device.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the second message is a NAS message, an LPP message, or an SLPP message.

Optionally, the first message includes a first SLPP message sent to one or more second terminals, or the first message includes one or more first SLPP messages sent to the second terminal.

The apparatus in this embodiment may be configured to perform the method in any one of the foregoing method embodiments on the network-side device. A specific implementation process and technical effect thereof are the same as those of the method embodiment on the network-side device. For details, refer to the detailed descriptions in the method embodiment on the network-side device. Details are not described herein again.

The message exchange apparatus for sidelink positioning in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The message exchange apparatus for sidelink positioning according to this embodiment of this application can implement each process implemented in the method embodiments in FIG. 4 to FIG. 8, with the same technical effect achieved. To avoid repetition, details are not described herein again.

FIG. 12 is a schematic diagram of a structure of a communication device according to an embodiment of this application. As shown in FIG. 12, the communication device 1200 includes a processor 1201 and a memory 1202. The memory 1202 stores a program or instructions capable of running on the processor 1201. For example, when the communication device 1200 is a terminal, and the program or instructions are executed by the processor 1201, the steps of the foregoing embodiment of the message exchange method for sidelink positioning are implemented, with the same technical effect achieved. When the communication device 1200 is a network-side device, and the program or instructions are executed by the processor 1201, the steps of the foregoing embodiment of the message exchange method for sidelink positioning are implemented, with the same technical effect achieved. To avoid repetition, details are not described herein again.

An embodiment of this application further provides a first terminal, including a processor and a communication interface. The communication interface is configured to: receive a first message sent by a network-side device, where the first message includes a first container, the first container corresponds to a first sidelink positioning protocol SLPP message, and the first SLPP message is used for sidelink positioning; and send the first SLPP message or a second SLPP message to a second terminal based on the first message, where the second SLPP message includes a second container, and the second container corresponds to the first SLPP message. The first terminal embodiment corresponds to the foregoing method embodiment on the first terminal side, and each implementation process and implementation of the foregoing method embodiment can be applied to the first terminal embodiment, with the same technical effect achieved.

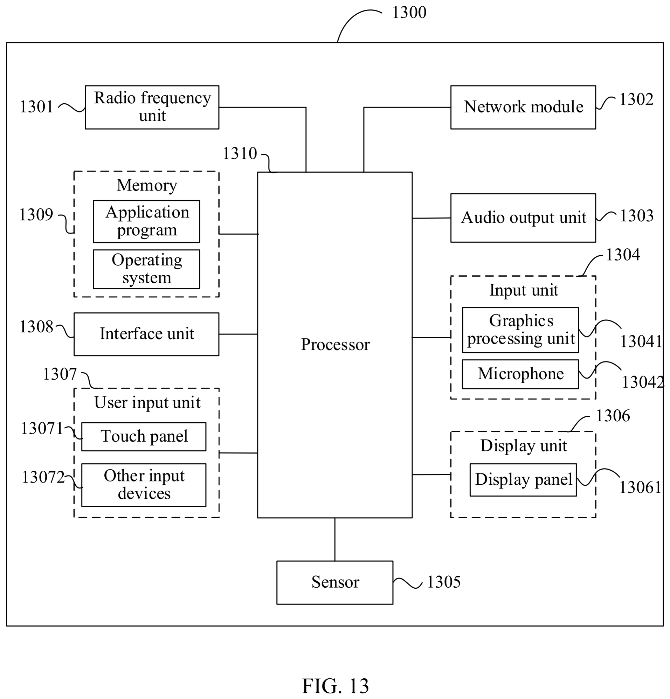

FIG. 13 is a schematic diagram of a structure of a terminal according to an embodiment of this application. As shown in FIG. 13, the terminal 1300 includes but is not limited to at least some components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (for example, a battery) supplying power to all components. The power supply may be logically connected to the processor 1310 through a power management system. In this way, functions such as charge management, discharge management, and power consumption management are implemented by using the power management system. The terminal structure shown in FIG. 13 does not constitute a limitation on the terminal. The terminal may include more or fewer components than those shown in the figure, or some components are combined, or component arrangements are different. Details are not described herein again.

It should be understood that, in this embodiment of this application, the input unit 1304 may include a graphics processing unit (Graphics Processing Unit, GPU) 13041 and a microphone 13042. The graphics processing unit 13041 processes image data of a still picture or video obtained by an image capture apparatus (such as a camera) in a video capture mode or an image capture mode. The display unit 1306 may include a display panel 13061, and the display panel 13061 may be configured in a form of a liquid crystal display, an organic light-emitting diode, or the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1301 may transmit the downlink data to the processor 1310 for processing. In addition, the radio frequency unit 1301 may send uplink data to the network-side device. Usually, the radio frequency unit 1301 includes but is not limited to an antenna, an amplifier, a transceiver, a coupler, a low noise amplifier, a duplexer, and the like.

The memory 1309 may be configured to store software programs or instructions and various data. The memory 1309 may primarily include a first storage area for storing programs or instructions and a second storage area for storing data. The first storage area may store an operating system, an application program or instructions required by at least one function (such as an audio play function and an image play function), and the like. In addition, the memory 1309 may include a volatile memory or a non-volatile memory, or the memory 1309 may include a transitory memory and a non-transitory memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1309 in this embodiment of this application includes but is not limited to these and any other suitable types of memories.

The processor 1310 may include one or more processing units. Optionally, the processor 1310 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1310.

The radio frequency unit 1301 is configured to: receive a first message sent by a network-side device, where the first message includes a first container, the first container corresponds to a first sidelink positioning protocol SLPP message, and the first SLPP message is used for sidelink positioning; and
send the first SLPP message or a second SLPP message to a second terminal based on the first message, where the second SLPP message includes a second container, and the second container corresponds to the first SLPP message.

Optionally, the first message further includes a terminal identifier or a terminal index of the second terminal.

Optionally, the processor 1310 is configured to determine, based on the terminal identifier or the terminal index of the second terminal, to send the first SLPP message or the second SLPP message to the second terminal; and
the radio frequency unit 1301 is specifically configured to send the first SLPP message or the second SLPP message to the second terminal after the processor 1310 determines to send the first SLPP message or the second SLPP message to the second terminal.

Optionally, the first message is used to deliver, to the first terminal, an SLPP message sent by the network-side device to the second terminal.

Optionally, the radio frequency unit 1301 is further configured to:
receive a third SLPP message sent by the second terminal, where the third SLPP message includes a third container, the third container corresponds to a fourth SLPP message, the fourth SLPP message is used for sidelink positioning, and the fourth SLPP message is a message sent by the second terminal to the network-side device; and
optionally, the radio frequency unit 1301 is further configured to:
   send a second message to the network-side device based on the third SLPP message, where the second message includes a fourth container, and the fourth container corresponds to the fourth SLPP message.

Optionally, the radio frequency unit 1301 is further configured to:
receive a fourth SLPP message sent by the second terminal, where the fourth SLPP message is used for sidelink positioning, and the fourth SLPP message is a message sent by the second terminal to the network-side device; and
optionally, the radio frequency unit 1301 is further configured to:
   send a second message to the network-side device based on the fourth SLPP message, where the second message includes a fourth container, and the fourth container corresponds to the fourth SLPP message.

Optionally, the second message further includes a terminal identifier or a terminal index of the second terminal.

Optionally, the first SLPP message or the second SLPP message is used to indicate that the first SLPP message is a message from the network-side device; or the first SLPP message or the second SLPP message carries first indication information, where the first indication information is used to indicate that the first SLPP message is a message from the network-side device.

Optionally, the third SLPP message is used to indicate that the fourth SLPP message is a message sent to the network-side device, or the third SLPP message carries second indication information, where the second indication information is used to indicate that the fourth SLPP message is a message sent to the network-side device.

Optionally, the processor 1310 is further configured to establish a sidelink unicast connection to the second terminal.

Optionally, the processor 1310 is further configured to process, by the first terminal, the first SLPP message in a case that the first message does not include a terminal identifier or a terminal index of the second terminal.

Optionally, the first terminal is a target terminal and the second terminal is an anchor terminal; or the first terminal is an anchor terminal and the second terminal is a target terminal.

Optionally, the network-side device is a location management function LMF.

Optionally, the first message is a non-access stratum NAS message, a long term evolution LTE positioning protocol LPP message, or a sidelink positioning protocol SLPP message.

Optionally, the second message is a NAS message, an LPP message, or an SLPP message.

Optionally, the first message includes a first SLPP message sent to one or more second terminals, or the first message includes one or more first SLPP messages sent to the second terminal.

An embodiment of this application further provides a second terminal, including a processor and a communication interface. The communication interface is configured to receive a first sidelink positioning protocol SLPP message or a second SLPP message sent by a first terminal, where the first SLPP message is obtained by the first terminal based on a first message sent by a network-side device, the first message includes a first container, the first container corresponds to the first SLPP message, the first SLPP message is used for sidelink positioning, the second SLPP message includes a second container, and the second container corresponds to the first SLPP message. The second terminal embodiment corresponds to the foregoing method embodiment on the second terminal side, and each implementation process and implementation of the foregoing method embodiment can be applied to the second terminal embodiment, with the same technical effect achieved. Optionally, the second terminal may use the terminal structure shown in FIG. 13.

An embodiment of this application further provides a network-side device, including a processor and a communication interface. The communication interface is configured to send a first message to a first terminal, where the first message includes a first container, the first container corresponds to a first sidelink positioning protocol SLPP message, the first SLPP message is used for sidelink positioning, and the first SLPP message is a message sent by the network-side device sent to a second terminal. The network-side device embodiment corresponds to the foregoing method embodiment on the network-side device, and each implementation process and implementation of the foregoing method embodiment can be applied to the network-side device embodiment, with the same technical effect achieved.

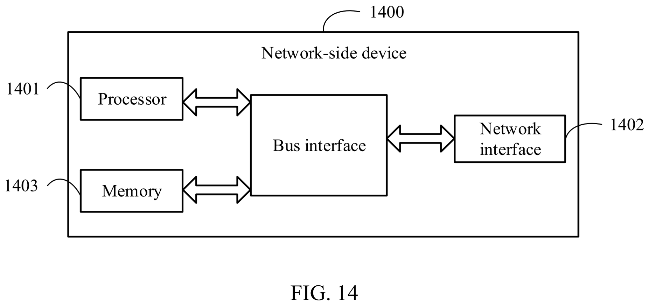

FIG. 14 is a schematic diagram of a structure of a network-side device according to an embodiment of this application. As shown in FIG. 14, the network-side device 1400 includes a processor 1401, a network interface 1402, and a memory 1403. The network interface 1402 is, for example, a common public radio interface (common public radio interface, CPRI).

Specifically, the network-side device 1400 in this embodiment of the present invention further includes a program or instructions stored in the memory 1403 and capable of running on the processor 1401. When the processor 1401 invokes the program or instructions in the memory 1403, the method performed by each module shown in FIG. 11 is performed, with the same technical effect achieved. To avoid repetition, details are not described herein again.

An embodiment of this application further provides a communication system, including a first terminal, a second terminal, and a network-side device. The first terminal may be configured to perform the steps of the foregoing message exchange method for sidelink positioning. The second terminal may be configured to perform the steps of the foregoing message exchange method for sidelink positioning. The network-side device may be configured to perform the steps of the foregoing message exchange method for sidelink positioning.

An embodiment of this application further provides a readable storage medium. The readable storage medium may be volatile or non-volatile. The readable storage medium stores a program or instructions. When the program or instructions are executed by a processor, each process of the foregoing embodiment of the message exchange method for sidelink positioning is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the message exchange method for sidelink positioning, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the message exchange method for sidelink positioning, with the same technical effect achieved. To avoid repetition, details are not described herein again.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A message exchange method for sidelink positioning, comprising:
receiving, by a first terminal, a first message sent by a network-side device, wherein the first message comprises a first container, the first container corresponds to a first sidelink positioning protocol SLPP message, and the first SLPP message is used for sidelink positioning; and
sending, by the first terminal, the first SLPP message or a second SLPP message to a second terminal based on the first message, wherein the second SLPP message comprises a second container, and the second container corresponds to the first SLPP message.

2. The message exchange method for sidelink positioning according to claim 1, wherein the first message further comprises a terminal identifier or a terminal index of the second terminal.

3. The message exchange method for sidelink positioning according to claim 2, wherein the sending, by the first terminal, the first SLPP message or a second SLPP message to a second terminal based on the first message comprises:
determining, by the first terminal based on the terminal identifier or the terminal index of the second terminal, to send the first SLPP message or the second SLPP message to the second terminal; and
sending, by the first terminal, the first SLPP message or the second SLPP message to the second terminal.

4. The message exchange method for sidelink positioning according to any one of claims 1 to 3, wherein
the first message is used to deliver, to the first terminal, an SLPP message sent by the network-side device to the second terminal.

5. The message exchange method for sidelink positioning according to any one of claims 1 to 3, wherein the method further comprises:
receiving, by the first terminal, a third SLPP message sent by the second terminal, wherein the third SLPP message comprises a third container, the third container corresponds to a fourth SLPP message, the fourth SLPP message is used for sidelink positioning, and the fourth SLPP message is a message sent by the second terminal to the network-side device; and
sending, by the first terminal, a second message to the network-side device based on the third SLPP message, wherein the second message comprises a fourth container, and the fourth container corresponds to the fourth SLPP message.

6. The message exchange method for sidelink positioning according to claim 1 or 3, wherein the method further comprises:
receiving, by the first terminal, a fourth SLPP message sent by the second terminal, wherein the fourth SLPP message is used for sidelink positioning, and the fourth SLPP message is a message sent by the second terminal to the network-side device; and
sending, by the first terminal, a second message to the network-side device based on the fourth SLPP message, wherein the second message comprises a fourth container, and the fourth container corresponds to the fourth SLPP message.

7. The message exchange method for sidelink positioning according to claim 5 or 6, wherein the second message further comprises a terminal identifier or a terminal index of the second terminal.

8. The message exchange method for sidelink positioning according to any one of claims 1 to 7, wherein
the first SLPP message or the second SLPP message is used to indicate that the first SLPP message is a message from the network-side device; or the first SLPP message or the second SLPP message carries first indication information, wherein the first indication information is used to indicate that the first SLPP message is a message from the network-side device.

9. The message exchange method for sidelink positioning according to claim 5, wherein
the third SLPP message is used to indicate that the fourth SLPP message is a message sent to the network-side device, or the third SLPP message carries second indication information, wherein the second indication information is used to indicate that the fourth SLPP message is a message sent to the network-side device.

10. The message exchange method for sidelink positioning according to any one of claims 1 to 7, wherein before the sending the first SLPP message or a second SLPP message to a second terminal based on the first message, the method further comprises:
establishing, by the first terminal, a sidelink unicast connection to the second terminal.

11. The message exchange method for sidelink positioning according to any one of claims 1 to 7, wherein the method further comprises:
in a case that the first message does not comprise a terminal identifier or a terminal index of the second terminal, processing, by the first terminal, the first SLPP message.

12. The message exchange method for sidelink positioning according to any one of claims 1 to 7, wherein the first terminal is a target terminal and the second terminal is an anchor terminal; or the first terminal is an anchor terminal and the second terminal is a target terminal.

13. The message exchange method for sidelink positioning according to any one of claims 1 to 7, wherein the network-side device is a location management function LMF.

14. The message exchange method for sidelink positioning according to any one of claims 1 to 7, wherein
the first message is a non-access stratum NAS message, a long term evolution LTE positioning protocol LPP message, or a sidelink positioning protocol SLPP message.

15. The message exchange method for sidelink positioning according to any one of claims 5 to 7, wherein
the second message is a NAS message, an LPP message, or an SLPP message.

16. The message exchange method for sidelink positioning according to any one of claims 1 to 7, wherein
the first message comprises a first SLPP message sent to one or more second terminals, or the first message comprises one or more first SLPP messages sent to the second terminal.

17. A message exchange method for sidelink positioning, comprising:
receiving, by a second terminal, a first sidelink positioning protocol SLPP message or a second SLPP message sent by a first terminal, wherein the first SLPP message is obtained by the first terminal based on a first message sent by a network-side device, the first message comprises a first container, the first container corresponds to the first SLPP message, the first SLPP message is used for sidelink positioning, the second SLPP message comprises a second container, and the second container corresponds to the first SLPP message.

18. The message exchange method for sidelink positioning according to claim 17, wherein the first message further comprises a terminal identifier or a terminal index of the second terminal.

19. The message exchange method for sidelink positioning according to claim 17, wherein
the first message is used to deliver, to the first terminal, an SLPP message sent by the network-side device to the second terminal.

20. The message exchange method for sidelink positioning according to any one of claims 17 to 19, wherein the method further comprises:
sending, by the second terminal, a third SLPP message to the first terminal, wherein the third SLPP message comprises a third container, the third container corresponds to a fourth SLPP message, the fourth SLPP message is used for sidelink positioning, and the fourth SLPP message is a message sent by the second terminal to the network-side device.

21. The message exchange method for sidelink positioning according to any one of claims 17 to 19, wherein the method further comprises:
sending, by the second terminal, a fourth SLPP message to the first terminal, wherein the fourth SLPP message is used for sidelink positioning, and the fourth SLPP message is a message sent by the second terminal to the network-side device.

22. The message exchange method for sidelink positioning according to any one of claims 17 to 21, wherein
the first SLPP message or the second SLPP message is used to indicate that the first SLPP message is a message from the network-side device; or the first SLPP message or the second SLPP message carries first indication information, wherein the first indication information is used to indicate that the first SLPP message is a message from the network-side device.

23. The message exchange method for sidelink positioning according to claim 20, wherein
the third SLPP message is used to indicate that the fourth SLPP message is a message sent to the network-side device, or the third SLPP message carries second indication information, wherein the second indication information is used to indicate that the fourth SLPP message is a message sent to the network-side device.

24. The message exchange method for sidelink positioning according to any one of claims 17 to 23, wherein the first terminal is a target terminal and the second terminal is an anchor terminal; or the first terminal is an anchor terminal and the second terminal is a target terminal.

25. The message exchange method for sidelink positioning according to any one of claims 17 to 23, wherein the network-side device is a location management function LMF.

26. The message exchange method for sidelink positioning according to any one of claims 17 to 23, wherein
the first message is a non-access stratum NAS message, a long term evolution LTE positioning protocol LPP message, or a sidelink positioning protocol SLPP message.

27. The message exchange method for sidelink positioning according to any one of claims 17 to 23, wherein
the first message comprises a first SLPP message sent to one or more second terminals, or the first message comprises one or more first SLPP messages sent to the second terminal.

28. A message exchange method for sidelink positioning, comprising:
sending, by a network-side device, a first message to a first terminal, wherein the first message comprises a first container, the first container corresponds to a first sidelink positioning protocol SLPP message, the first SLPP message is used for sidelink positioning, and the first SLPP message is a message sent by the network-side device to a second terminal.

29. The message exchange method for sidelink positioning according to claim 28, wherein the first message further comprises a terminal identifier or a terminal index of the second terminal.

30. The message exchange method for sidelink positioning according to claim 28, wherein
the first message is used to deliver, to the first terminal, an SLPP message sent by the network-side device to the second terminal.

31. The message exchange method for sidelink positioning according to any one of claims 28 to 30, wherein the method further comprises:
receiving, by the network-side device, a second message sent by the first terminal, wherein the second message comprises a fourth container, the fourth container corresponds to a fourth SLPP message, the fourth SLPP message is used for sidelink positioning, and the fourth SLPP message is a message sent by the second terminal to the network-side device.

32. The message exchange method for sidelink positioning according to claim 31, wherein the second message further comprises a terminal identifier or a terminal index of the second terminal.

33. The message exchange method for sidelink positioning according to any one of claims 28 to 32, wherein
the first SLPP message is used to indicate that the first SLPP message is a message from the network-side device, or the first SLPP message carries first indication information, wherein the first indication information is used to indicate that the first SLPP message is a message from the network-side device.

34. The message exchange method for sidelink positioning according to any one of claims 28 to 32, wherein the first terminal is a target terminal and the second terminal is an anchor terminal; or the first terminal is an anchor terminal and the second terminal is a target terminal.

35. The message exchange method for sidelink positioning according to any one of claims 28 to 32, wherein the network-side device is a location management function LMF.

36. The message exchange method for sidelink positioning according to any one of claims 28 to 32, wherein
the first message is a non-access stratum NAS message, a long term evolution LTE positioning protocol LPP message, or a sidelink positioning protocol SLPP message.

37. The message exchange method for sidelink positioning according to claim 31 or 32, wherein
the second message is a NAS message, an LPP message, or an SLPP message.

38. The message exchange method for sidelink positioning according to any one of claims 28 to 32, wherein
the first message comprises a first SLPP message sent to one or more second terminals, or the first message comprises one or more first SLPP messages sent to the second terminal.

39. A message exchange apparatus for sidelink positioning, comprising:
a receiving module, configured to receive a first message sent by a network-side device, wherein the first message comprises a first container, the first container corresponds to a first sidelink positioning protocol SLPP message, and the first SLPP message is used for sidelink positioning; and
a sending module, configured to send the first SLPP message or a second SLPP message to a second terminal based on the first message, wherein the second SLPP message comprises a second container, and the second container corresponds to the first SLPP message.

40. A message exchange apparatus for sidelink positioning, comprising:
a receiving module, configured to receive a first sidelink positioning protocol SLPP message or a second SLPP message sent by a first terminal, wherein the first SLPP message is obtained by the first terminal based on a first message sent by a network-side device, the first message comprises a first container, the first container corresponds to the first SLPP message, the first SLPP message is used for sidelink positioning, the second SLPP message comprises a second container, and the second container corresponds to the first SLPP message.

41. A message exchange apparatus for sidelink positioning, comprising:
a sending module, configured to send a first message to a first terminal, wherein the first message comprises a first container, the first container corresponds to a first sidelink positioning protocol SLPP message, the first SLPP message is used for sidelink positioning, and the first SLPP message is a message sent by a network-side device to a second terminal.

42. A first terminal, comprising a processor and a memory, wherein the memory stores a program or instructions capable of running on the processor, and when the program or instructions are executed by the processor, the steps of the message exchange method for sidelink positioning according to any one of claims 1 to 16 are implemented.

43. A second terminal, comprising a processor and a memory, wherein the memory stores a program or instructions capable of running on the processor, and when the program or instructions are executed by the processor, the steps of the message exchange method for sidelink positioning according to any one of claims 17 to 27 are implemented.

44. A network-side device, comprising a processor and a memory, wherein the memory stores a program or instructions capable of running on the processor, and when the program or instructions are executed by the processor, the steps of the message exchange method for sidelink positioning according to any one of claims 28 to 38 are implemented.

45. A readable storage medium, wherein the readable storage medium stores a program or instructions, and when the program or instructions are executed by a processor, the message exchange method for sidelink positioning according to any one of claims 1 to 16 is implemented, or the message exchange method for sidelink positioning according to any one of claims 17 to 27 is implemented, or the steps of the message exchange method for sidelink positioning according to any one of claims 28 to 38 are implemented.
